(19) Europäisches Patentamt
European Patent Office
Office européen des brevets

(11) **EP 2 026 466 A1**

(12) **EUROPEAN PATENT APPLICATION**

(43) Date of publication:
**18.02.2009 Bulletin 2009/08**

(51) Int Cl.:
*H03M 1/06* (2006.01)    *G01S 7/03* (2006.01)
*G01S 13/90* (2006.01)    *H04B 1/04* (2006.01)

(21) Application number: **07270040.4**

(22) Date of filing: **02.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Astrium Limited**
**Gunnels Wood Road**
**Stevenage, Hertfordshire, SG1 2AS (GB)**

(72) Inventor: **Weaver, John Anthony**
**Hertfordshire SG1 2AS (GB)**

(74) Representative: **BAE SYSTEMS plc**
**Group IP Department**
**Lancaster House**
**P.O. Box 87**
**Farnborough Aerospace Centre**
**Farnborough, Hampshire GU14 6YU (GB)**

(54) **Synthetic aperture radar having spectrally pure chirp signals**

(57) In order to produce chirp signals of a desired spectral purity for use in a deramp SAR system, a digital version of the chirp signal is converted to analog form in a digital to analog converter (38), and a version of the analog signal in Nyquist zone 2 is filtered and applied to a mixer (46), together with a local oscillator signal, for upconverting to an RF signal for transmission. Use of the Nyquist zone 2 version, with a higher frequency than the base analog signal in Nyquist zone 1, ensures that intermodulation products generated in the mixer (46) are sufficiently spaced from the upconverted signal, that a subsequent band pass filter (48) may block the unwanted products.

# Figure 2

**Description**

Field of the Invention

The present invention relates to a method and means for generating modulation signals such as chirp signals, which are transmitted as RF signals, preferably for a synthetic aperture radar (SAR) system.

Background Art

SAR systems are well known, and may include chirp signals for increased resolution. Chirp signals modulate the transmitted signal, and are demodulated in the received signal, either by means of a local oscillator IF signal, or, in deramp SAR, with a deramp signal of similar form to the chirp signal. In order that accurate interpretation of the received signals may take place, it is necessary that the chirp signals generated at the transmit stage are spectrally pure, in the sense that they do not contain unwanted components, and contain only the intended frequency spectrum.

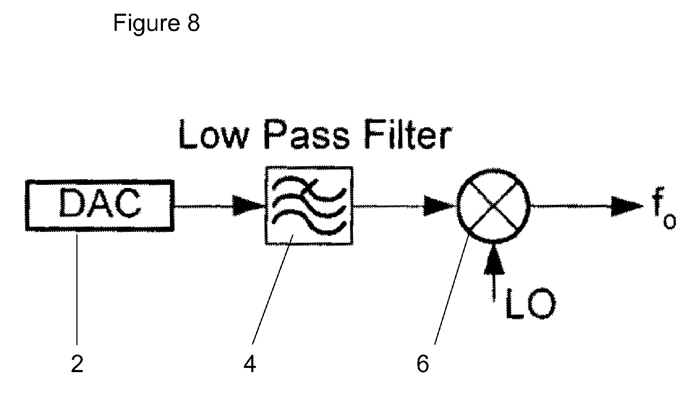

Chirp signals are commonly generated by digital synthesis, and as shown in the prior art arrangement of Figure 8, the digital signal is converted to analog form in a digital to analog converter (DAC) 2. The analog signal is upconverted to the RF transmission frequency $f_0$ by mixing the signal in a mixer 6 with a Local Oscillator signal LO.

In addition, a low pass filter 4 is provided for the following reason. In commercially available digital to analog converters, sample and hold operations take place at a sampling frequency. The sampling frequency is in general more than twice as high as the highest frequency in the generated signal, since according to the Nyquist sampling theorem, a signal may only be reproduced faithfully if the sampling frequency is at least twice that of the desired signal. The Nyquist frequency is defined as that frequency below which faithful reproduction may take place, and is equal to half the sampling frequency. In order to avoid transmission of unwanted aliasing signals from DAC 2 above the Nyquist frequency, low pass filter 4 has a cut-off frequency at about the Nyquist frequency.

Nevertheless, a further source of unwanted interfering signals arises from the mixing process, which may produce various higher order intermodulation products, which may interfere with the transmitted chirp signal, particularly where the chirp signal has a wide bandwidth.

Summary of the Invention

The present invention is based in part on an understanding that in the digital to analog conversion process, an analog signal is produced not only below the Nyquist frequency, in a frequency region known as Nyquist zone 1, but further versions of the analog signal are produced in frequency regions above zone 1 and between harmonics of the sampling frequency. The frequency region between the Nyquist frequency and the sampling frequency is known as zone 2, and regions between the sampling frequency and the second harmonic of the sampling frequency are known as zones 3, 4, etc., etc..

The concept of the invention is to employ a higher order version of the analog signal above Nyquist zone 1 which is fed to a mixer for upconversion to an RF frequency. It has been realised that higher order intermodulation products generated in an upconverting mixing process, using a higher order version of the analog signal, are more widely spaced from the wanted upconverted first order signal than the corresponding products for the baseband Nyquist zone 1 signal. This enables a subsequent filtering process to remove the intermodulation products, and to produce an upconverted signal which is substantially free of spuriae, or at least where spuriae are much reduced as compared with the prior art.

Accordingly, the invention provides in a first aspect a method of generating an RF signal for transmission, comprising:

providing a digital to analog converter, which has a predetermined sampling frequency,

generating a digital version of a modulation signal, and converting said modulation signal to an analog signal in said digital to analog converter,

mixing a selected version of said analog signal, in a frequency region above Nyquist zone 1 with a local oscillator signal in order to generate said RF signal.

In a second aspect, the invention provides apparatus for generating a RF signal for transmission, comprising:

means for generating a digital version of a modulation signal, an digital to analog converter, having a predetermined sampling frequency, for converting the modulation signal to an analog signal, and filter means for providing a selected version of the analog signal, in a frequency region above Nyquist zone 1, to mixer means for mixing said selected version with a local oscillator signal, for generating said RF signal.

The RF signal may be band pass filtered to ensure that intermodulation products are not transmitted.

As preferred said selected version of the analog signal is in Nyquist zone 2. This version is the second order version of the signal generated above the sampling frequency, but mirrored, or folded-back, about the sampling frequency into zone 2. This version is preferred, since the amplitude of the signal is reasonably high as compared with the baseband signal, despite the sinc function roll-off of amplitude with frequency arising from the digital to analog converter. Nevertheless, versions of the analog signal in zones 3,4 etc., may be employed as desired. In an alternative arrangement, the digital version of the modulation signal may be generated with a frequency above Nyquist zone 1,and in zone 2, etc.

Further the chirp signal may be generated with an amplitude modulation, so that a folded back version of the chirp, in Nyquist zone 2, has an inverse amplitude modulation of the sinc roll-off of amplitude with frequency, so that the signal as transmitted has essentially a constant amplitude with frequency, as is explained hereinafter.

Whilst the invention has particular application to generation of chirp signals in a SAR system, preferably wide band (of the order of 100MHz) in a deramp radar, the invention may be applied to generation of any signal which is to be transmitted at RF. For example the invention may be applied to video signals or clusters of narrow band voice channel signals which are to be transmitted in microwave frequency bands in Communications Satellites.

Brief Description of the Drawings

A preferred embodiment of the invention will now be described with reference to the accompanying drawings, wherein:

Figure 1 is a block diagram representation of a deramp SAR radar employing chirp;

Figure 2 is a schematic representation of a preferred embodiment of the invention;

Figure 3 is an exemplary graph of the transmitted spectra produced by the DAC of Figure 2;

Figure 4 is a graph of the spectra of digitally generated chirp signals in Nyquist Zones 1 and 2;

Figure 5 is a diagram, including a table of intermodulation product values for a double balanced mixer, and a mathematical representation of the chirp signal and the local oscillator signal;

Figure 6 is a graphical representation of the RF signal, and associated intermodulation products, both for the prior art Nyquist zone 1 signal, and the Nyquist zone 2 signal, in accordance with the invention;

Figure 7 is an enlarged version of figure 6, showing the peaks of the wanted signals and unwanted intermodulation products; and

Figure 8 is a schematic diagram of a prior art construction.

Description of the Preferred Embodiment

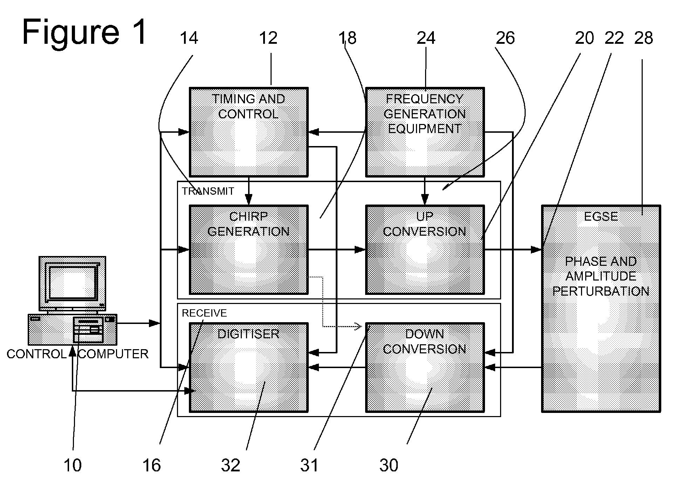

Referring to Figure 1, which is a block diagram representation of a deramp SAR radar employing chirp, a control computer 10 provides overall control to Timing and Control unit 12, Transmit section 14, and Receive section 16. Transmit section 14 includes a chirp generation unit 18, and an upconversion unit 20 which provides an RF signal on line 22. Frequency generation equipment 24 is employed inter alia for generating a local oscillator signal LO on line 26. The RF signal is transmitted to Electrical Ground Support Equipment (EGSE) 28, which produces unwanted phase and amplitude perturbation of transmitted and returned signals. The Receive unit 16 receives from EGSE 28 a returned signal which is processed in a Down Conversion unit 30, and a Digitizer 32. A chirp signal is provided on line 31 to enable deramping of the returned signal to take place in downconverter 30, by means of an analog mixing process. The returned SAR signal is deramped in order to provide frequency tone signals for analysis. It will be clear that a chirp signal of high precision is required to enable an accurate deramping to take place.

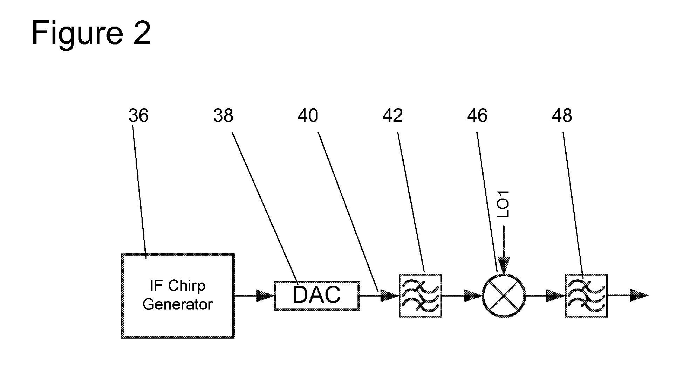

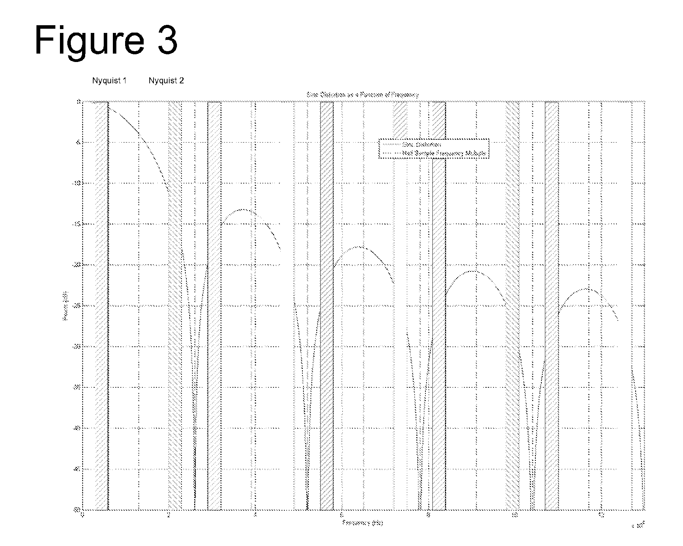

Referring to Figure 2, this is a different representation of units 18, 20 and 24, and comprises a preferred embodiment of the invention. An IF chirp generator 36 produces a chirp signal in digital format. The chirp signal is converted to analog form in DAC 38, which has a sampling frequency of 260 MHz. The high sampling frequency of 260 MHz is required on account of the large bandwidth of the chirp signal - 100MHz. Thus the Nyquist frequency for the DAC is 130MHz. As shown in Figure 3, the spectra of an exemplary DAC is shown, with a sampling frequency of 260 MHz, so that Nyquist zone 1 extends from 0-130 MHz, and Nyquist zone 2 extends from 130MHz - 260 MHz. Harmonics of the sampling frequency and Nyquist frequency occur at repeated intervals, giving rise to further Nyquist zones, n, n+1, etc. An exemplary signal with a bandwidth extending from 10-25MHz is shown, and has harmonics occurring as a result of the sample/hold process at 270, 540MHz, etc, etc. Each harmonic produces a folded-back version, mirrored about the sampling frequency harmonic. Thus the harmonic at 270 - 285MHz produces a folded-back version at 235-250MHz. This version lies in Nyquist zone 2.

It is a feature of DACs that their output has an amplitude represented by a sinc function (sin x / x) - this is shown in Figure 3 as an undulating line. It will be noted that the sinc function distorts signals and reduces their amplitude by a greater extent in zone 2 than in zone 1, and by a still greater extent in zone 3, etc.

. Use of such a high sampling frequency as 260MHz in DAC 38 of Figure 2, and use, in accordance with the invention of Nyquist zone 2, places demands on the DAC, and in particular:

■ The DAC needs to be 'fast' enough to support this behaviour.

■ There will be increased jitter in the transmitted signal through the use of Nyquist Zone 2, and therefore a DAC with low clock jitter is desirable.

■ Increased range of distortion lowers the mean output level of the DAC (after pre-emphasis) resulting in increased quantisation noise, therefore more bits in the input digital signal are required for this usage.

A DAC that may be employed is an Atmel TS86101G2B MUXDAC, which is a 10 bit 1.2Gsps device.

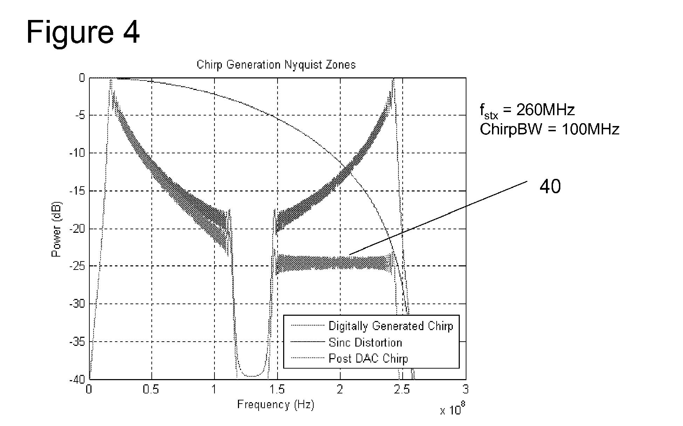

The digital form of the chirp signal employed in the present invention is shown in graphical form in Figure 4 as a wideband signal extending from 10MHz to about 110 MHz, with an amplitude decreasing with frequency. In the sampling process, aliased versions of the chirp signal are produced. In particular, a version is produced as shown lying in Nyquist zone 2, reflected or folded back about the sampling frequency of 260 MHz. This version extends from about 140 MHz to about 240 MHz. The amplitude of the folded back analog version of the chirp is determined by two factors; firstly the given amplitude modulation of the digital baseband signal, which causes the amplitude of the folded back version in zone 2 to rise with frequency, and secondly, as shown in Figure 4, the sinc function roll-off produced by the sampling process, which causes the amplitude to decrease with frequency.

The base band Chirp signal generated as shown in Figure 4 has an amplitude modulated by function, which is such that the folded back version is modulated by an inverse sinc function. Therefore the resultant chirp signal produced by DAC 38 within Nyquist zone 2 is of constant amplitude with frequency, as shown at 40.

The Chirp signal may be expressed in mathematical form as follows:

$$f_{IF} = \cos\left( 2\pi \frac{f_{start}}{f_{sam}} k + \pi\alpha k^2 \right) \qquad 0 \le k \le N - 1$$

The term dependent on $k^2$ provides the chirp. The term k is incremented in time up to a maximum value N, which in this example is 10000. Each increment is clocked in synchronism with the sampling operation of DAC 38.

As shown in Figure 2, the chirp signal 40 located in Zone 2 is passed by a band pass filter 42 of suitable bandwidth, while excluding signals in zones 1, 3 etc. The signal 40 is mixed with a local oscillator signal LO in a mixer 46 (Hittite HMC175MS8 Double Balanced Mixer). The local oscillator signal may be generated digitally, and represented as a cos function, as follows:

$$f_{LO} = \cos\left( 2\pi \frac{f_{lo}}{f_{sam}} k \right) \qquad 0 \le k \le N - 1$$

which similarly to the chirp signal, is incremented in $k$ with the sampling frequency. Alternatively, the local oscillator signal may be generated as an analogue signal.

The output of the mixer 46, the upconverted chirp signal 22, is passed through a further bandpass filter 48 to eliminate intermodulation products. One or more further stages of upconversion may be provided as desired, until the desired final RF transmission frequency is attained.

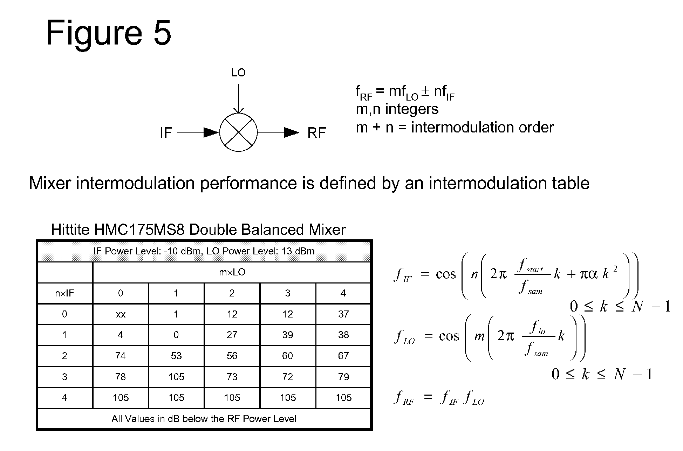

The intermodulation products are shown in the table of Figure 5, where:

$$f_{RF} = mf_{LO} \pm nf_{IF}$$

$$m,n \text{ integers}$$

$$m + n = \text{intermodulation order}$$

The wanted RF output is m = n = 1, represented in the table as 0 power level. The other products have power levels specified in dB below the RF output.

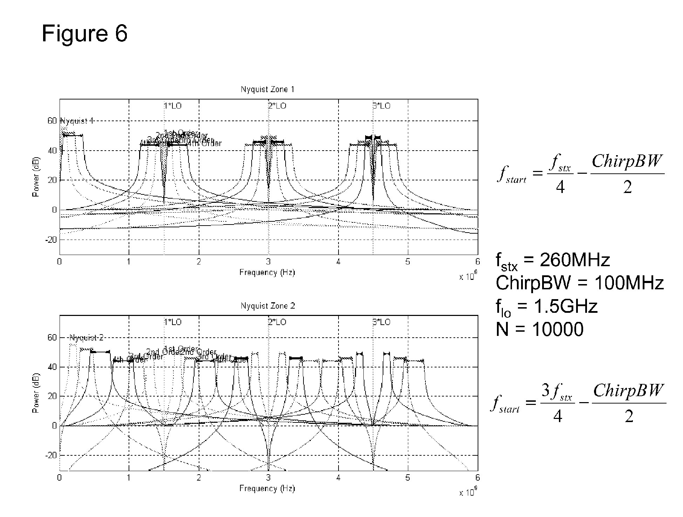

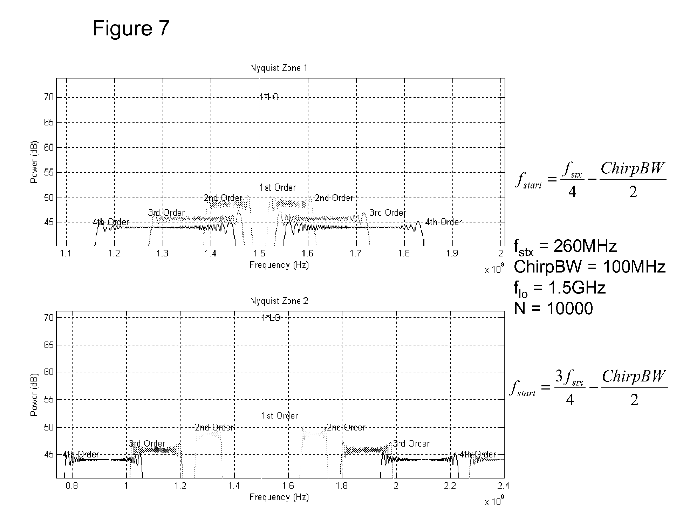

Referring now to Figures 6 and 7, each figure shows two graphical representations, the upper one being the output of mixer 6, together with intermodulation products for the prior art arrangement of Figure 8. The lower graph represents the output of mixer 46 of Figure 2. It may be seen that for mixer 6 of Figure 8, the intermodulation products overlap with the wanted output, the 1st order product, whereas for mixer 46 of Figure 2, the intermodulation products are widely spaced from the wanted RF output.

This may be explained as follows. Referring to Figure 3, it may be seen the baseband modulation signal has a relatively low value, in the example shown 10 - 25MHz, whereas the zone 2 version has a high value of 235-250MHz. The intermodulation products will have frequency values spaced from the local oscillator frequency, by integral values of the modulation signal. Thus the baseband signal, having a bandwidth of about 15 MHz, which is comparable to its absolute frequency value, has higher order products overlapping with the wanted first order product. However, for the zone 2 signal, since the absolute value of frequency, ~ 250 MHz, is far greater than the bandwidth of 15 MHz, then the higher order products resulting from the mixing process will have frequency values spaced from the local oscillator frequency, by integral values of 250 MHz. Therefore they do not overlap with the first order product, and may be filtered from the output signal.

Similar considerations apply for the wide bandwidth chirp signal of the present invention. This may be represented as shown in Figure 5, as:

$$f_{IF} = \cos\left( n\left( 2\pi \frac{f_{start}}{f_{sam}} k + \pi \alpha k^2 \right) \right) \qquad 0 \le k \le N-1$$

For the baseband signal of Figure 6,

$$f_{start} = \frac{f_{stx}}{4} - \frac{ChirpBW}{2}$$

and $f_{stx}$ = 260MHz, ChirpBW = 100MHz, $f_{lo}$ = 1.5GHz, N = 10000, and n = intermodulation order

Thus $f_{start}$ has a relatively low value of about 10 MHz, whereas the bandwidth of the chirp signal is about 100 MHz. Thus it is inevitable that as shown in Figure 6, there will be a clustering of the intermodulation products about the local oscillator frequency.

For the zone 2 version of the chirp signal,

$$f_{start} = \frac{3f_{stx}}{4} - \frac{ChirpBW}{2}$$

Thus $f_{start}$ in this case has a much higher value of about 145 MHz, whereas the bandwidth of the chirp signal remains about 100 MHz. Hence the higher order products, being spaced from the local oscillator signal in multiples of 145 MHz, will not overlap the first order product, as shown in Figures 6 and 7, enabling the wanted first order product to be isolated.

The invention is not only applicable to chirp signals, but may be employed in other circumstances where a high bandwidth is necessary, for example communications satellites transmitting video signals or clusters of narrowband voice channels as wide bandwidth communications signals.

**Claims**

1.  A method of generating an RF signal for transmission, comprising:

    providing a digital to analog converter, which has a predetermined sampling frequency,
    generating a digital version of a modulation signal, and converting said modulation signal to an analog signal in said digital to analog converter,
    mixing a selected version of said analog signal, in a frequency region above Nyquist zone 1, with a local oscillator signal, for generating said RF signal.

2.  Apparatus for generating an RF signal for transmission, comprising:

    means for generating a digital version of a modulation signal, a digital to analog converter, having a predetermined sampling frequency, for converting the modulation signal to an analog signal, filter means for providing a selected version of the analog signal, in a frequency region above Nyquist zone 1, to mixer means for mixing said selected version with a local oscillator signal, for generating said RF signal.

3.  A method according to claim 1, or apparatus according to claim 2, wherein said modulation signal has a bandwidth which occupies a major part of Nyquist zone 1, or of a higher zone.

4.  Method or apparatus according to any preceding claim, wherein said modulation signal is a chirp signal.

5.  Method or apparatus according to claim 3 or 4, wherein said modulation signal has an amplitude modulation with frequency, which is of a form such as to compensate for sinc distortion produced by said digital to analog converter in said selected version.

6.  Method or apparatus according to any preceding claim, wherein said selected version lies in Nyquist zone 2.

7.  Method or apparatus according to any preceding claim, wherein said RF signal is band passed filtered to exclude higher order intermodulation products from said mixing.

8.  A deramp synthetic aperture radar, incorporating the method or apparatus of claim 4 or 5.

# Figure 1

# Figure 2

# Figure 3

# Figure 4

Chirp Generation Nyquist Zones

$f_{stx}$ = 260MHz
ChirpBW = 100MHz

40

Legend:
- Digitally Generated Chirp
- Sinc Distortion
- Post DAC Chirp

Power (dB) vs Frequency (Hz) × 10⁸

# Figure 5

$$f_{RF} = mf_{LO} \pm nf_{IF}$$

m,n integers

m + n = intermodulation order

Mixer intermodulation performance is defined by an intermodulation table

Hittite HMC175MS8 Double Balanced Mixer

| IF Power Level: -10 dBm, LO Power Level: 13 dBm | | | | |
|---|---|---|---|---|
| nxIF | mxLO | | | |
| | 0 | 1 | 2 | 3 | 4 |
| 0 | xx | 1 | 12 | 12 | 37 |
| 1 | 4 | 0 | 27 | 39 | 38 |
| 2 | 74 | 53 | 56 | 60 | 67 |
| 3 | 78 | 105 | 73 | 72 | 79 |
| 4 | 105 | 105 | 105 | 105 | 105 |
| All Values in dB below the RF Power Level | | | | |

$$f_{IF} = \cos\left(n\left(2\pi\frac{f_{start}}{f_{sam}}k + \pi\alpha k^2\right)\right)$$
$$0 \le k \le N - 1$$
$$f_{LO} = \cos\left(m\left(2\pi\frac{f_{lo}}{f_{sam}}k\right)\right)$$
$$0 \le k \le N - 1$$
$$f_{RF} = f_{IF}f_{LO}$$

# Figure 6

$$f_{start} = \frac{f_{stx}}{4} - \frac{ChirpBW}{2}$$

$f_{stx}$ = 260MHz
ChirpBW = 100MHz
$f_{lo}$ = 1.5GHz
N = 10000

$$f_{start} = \frac{3 f_{stx}}{4} - \frac{ChirpBW}{2}$$

## Figure 7

$$f_{start} = \frac{f_{stx}}{4} - \frac{ChirpBW}{2}$$

$f_{stx}$ = 260MHz
ChirpBW = 100MHz
$f_{lo}$ = 1.5GHz
N = 10000

$$f_{start} = \frac{3f_{stx}}{4} - \frac{ChirpBW}{2}$$

Figure 8

Low Pass Filter

DAC

2    4    6

$f_o$

LO

## EUROPEAN SEARCH REPORT

**European Patent Office**

**Application Number**

EP 07 27 0040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/07093 A (ITALTEL SPA [IT]; BADA ANNA MARINA [IT]; POLITI MARCO [IT]) 11 February 1999 (1999-02-11) * the whole document * | 1-8 | INV. H03M1/06 G01S7/03 G01S13/90 H04B1/04 |
| X | BADA A M ET AL: "DESIGN AND REALISATION OF DIGITAL RADIO TRANSCEIVER USING SOFTWARE RADIO ARCHITECTURE" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 3 OF 3. CONF. 51, 15 May 2000 (2000-05-15), pages 1727-1731, XP000968300 ISBN: 0-7803-5719-1 * paragraph [00II]; figure 1 * | 1-8 | |
| X | WO 99/67878 A (CONEXANT SYSTEMS INC [US]) 29 December 1999 (1999-12-29) * the whole document * | 1-8 | |
| X | US 6 507 303 B1 (ALELYUNAS CARL H [US] ET AL) 14 January 2003 (2003-01-14) * abstract * * column 5, lines 12-50; figure 5 * | 1-8 | TECHNICAL FIELDS SEARCHED (IPC) H03M G01S H04B |

-/--

The present search report has been drawn up for all claims

| Place of search | Date of completion of the search | Examiner |
|---|---|---|
| Munich | 9 November 2007 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 07 27 0040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRAD BRANNON: "Wideband radios need wide dynamic range converters" INTERNET ARTICLE, [Online] 4 January 2002 (2002-01-04), pages 1-4, XP002458026 Retrieved from the Internet: URL:http://web.archive.org/web/20020104143 710/http://www.analog.com/library/analogDi alogue/archives/29-2/wdbndradios.html> [retrieved on 2007-11-08] * page 3; figure 5 * | 1-8 | |
| A | HENRIQUES B G ET AL: "High-speed D/A conversion with linear phase sin x/x compensation" PROCEEDINGS OF THE INTERNATIONAL SYMPOSIUM ON CIRCUITS AND SYSTEMS. (ISCS). CHICAGO, MAY 3 - 6, 1993, NEW YORK, IEEE, US, vol. VOL. 2, 3 May 1993 (1993-05-03), pages 1204-1207, XP010115321 ISBN: 0-7803-1281-3 * paragraph [0001]; figure 3 * | 5 | |
| A | US 4 633 198 A (GOETZ PAUL W [US] ET AL) 30 December 1986 (1986-12-30) * the whole document * | 5,8 | TECHNICAL FIELDS SEARCHED (IPC) |

The present search report has been drawn up for all claims

| Place of search | Date of completion of the search | Examiner |
|---|---|---|
| Munich | 9 November 2007 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 026 466 A1

## ANNEX TO THE EUROPEAN SEARCH REPORT
## ON EUROPEAN PATENT APPLICATION NO.

EP 07 27 0040

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2007

| Patent document cited in search report | | Publication date | Patent family member(s) | | Publication date |
|---|---|---|---|---|---|
| WO 9907093 | A | 11-02-1999 | CA | 2298567 A1 | 11-02-1999 |
| | | | EP | 1021900 A2 | 26-07-2000 |
| | | | IT | MI971802 A1 | 29-01-1999 |
| | | | US | 6611565 B1 | 26-08-2003 |
| WO 9967878 | A | 29-12-1999 | US | 6268818 B1 | 31-07-2001 |
| US 6507303 | B1 | 14-01-2003 | US | 2003095060 A1 | 22-05-2003 |
| US 4633198 | A | 30-12-1986 | NONE | | |

EPO FORM P0459

For more details about this annex : see Official Journal of the European Patent Office, No. 12/82